# EUROPÄISCHE PATENTSCHRIFT

(11) **EP 2 079 605 B1**
(45) Veröffentlichungstag und Bekanntmachung des Hinweises auf die Patenterteilung: **11.08.2010**
(21) Anmeldenummer: 07818113.8
(22) Anmeldetag: 12.09.2007
(51) Int. Cl.: B60N 2/48

(54) **BETÄTIGUNGSVORRICHTUNG FÜR EINE IN LÄNGSRICHTUNG ZU VERSCHIEBENDE FIXIERSTANGE**
ACTUATING DEVICE FOR A FIXING ROD TO BE DISPLACED IN THE LONGITUDINAL DIRECTION
DISPOSITIF D'ACTIONNEMENT POUR UNE TRINGLE D'IMMOBILISATION A DEPLACER EN TRANSLATION EN DIRECTION LONGITUDINALE

(30) Priorität: 13.10.2006 DE 102006049053
(43) Veröffentlichungstag der Anmeldung: 22.07.2009
(73) Patentinhaber: A. Raymond et Cie., 38000 Grenoble (FR)
(72) Erfinder: SILBEREISEN, Friedrich, 79588 Efringen-Kirchen (DE); DE JONG, Michael, 79589 Binzen (DE); TREMMEL, Günter, 79739 Schwörstadt (DE)
(74) Vertreter: Rüttgers, Joachim
(86) Internationale Anmeldenummer: PCT/EP2007/007922
(87) Internationale Veröffentlichungsnummer: WO 2008/046478

(56) Entgegenhaltungen:
- EP-A- 1 316 470
- DE-A1- 10 160 929
- DE-B3-102005 017 580

## Beschreibung

Die Erfindung betrifft eine Betätigungsvorrichtung für eine in einer Längsrichtung zu verschiebende Fixierstange, insbesondere für eine Fixierstange zum verschiebbaren Befestigen einer Kopfstütze an einem Sitz eines Kraftfahrzeugs.

Derartige Betätigungsvorrichtungen sind beispielsweise aus DE 195 23 358 C3, DE 10 2004 059 237 B3 oder DE 10 2005 017 580 B3 bekannt. Aus der DE 10 2005 017 580 ist eine Betätigungsvorrichtung entsprechend dem Oberbegriff des Anspruchs 1 bekannt. Diese herkömmlichen Betätigungsvorrichtungen verfügen über eine Lagerhülse, die in einer Kopfstütze eines Kraftfahrzeugs integriert ist. Weiterhin ist ein Anlenkschieber vorhanden, der in der Lagerhülse in einer Betätigungsrichtung verschiebbar gelagert ist. Ein auf die Fixierstange einwirkender Mechanismus ist mit dem Anlenkschieber zur Freigabe der Fixierstange zum Verschieben derselben in Eingriff. Bei Betätigen des Anlenkschiebers wird eine mit einer in der Fixierstange eingebrachten Rastnut in Eingriff stehende Rastnase aus der Rastnut heraus bewegt, so dass die Fixierstange in Längsrichtung verschiebbar ist.

Der Erfindung liegt die Aufgabe zugrunde, eine Betätigungsvorrichtung der eingangs genannten Art anzugeben, die bei einem relativ einfachen, eine effiziente Montage ermöglichenden Aufbau auch bei beengten Platzverhältnissen ein Drehen der Fixierstange bewirkt, um diese in Längsrichtung verschieben zu können.

Diese Aufgabe wird bei einer Betätigungsvorrichtung der eingangs genannten Art erfindungsgemäß mit den kennzeichnenden Merkmalen des Patentanspruches 1 gelöst.

Dadurch, dass bei der erfindungsgemäßen Betätigungsvorrichtung eine Drehung der Fixierstange über einen Anlenkarm erfolgt, der an der Lagerhülse schwenkbar angebracht und mit einem drehfest mit der Fixierstange in Verbindung stehenden Anlenkkopf verbunden ist, lässt sich die einfach zu montierende Betätigungsvorrichtung auch bei beengten Platzverhältnissen einsetzen, da sich die Dimensionen der drei durch die Wirkungsweise der Betätigungsvorrichtung relevanten Bauelemente verhältnismäßig einfach aufeinander anpassen lassen.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Erläuterung eines Ausführungsbeispiels mit Bezug auf die Figuren der Zeichnung. Es zeigen:
- Fig. 1: in einer perspektivischen Ansicht ein Ausführungsbeispiel einer erfindungsgemäßen Betätigungsvorrichtung in einer Einbausituation in einer Kopfstütze eines Kraftfahrzeugs zusammen mit einer an einem Anlenkkopf der Betätigungs- vorrichtung angebrachten Fixierstange,
- Fig. 2: in einer perspektivischen Explosionsansicht das Ausfüh- rungsbeispiel gemäß Fig. 1,
- Fig. 3: in einer perspektivischen Ansicht den Anlenkkopf des Aus- führungsbeispiels gemäß Fig. 1 und Fig. 2 mit Blick auf die der Fixierstange zugewandte Seite,
- Fig. 4: in einer perspektivischen Ansicht den Anlenkkopf des Aus- führungsbeispiels gemäß Fig. 1 bis Fig. 3 mit einer zur Auf- nahme des Anlenkkopfes eingerichteten Fixierstange,
- Fig. 5: im Schnitt das Ausführungsbeispiel gemäß Fig. 1 in einer ersten Schwenkstellung und
- Fig. 6: im Schnitt das Ausführungsbeispiel gemäß Fig. 1 in einer zweiten Schwenkstellung.

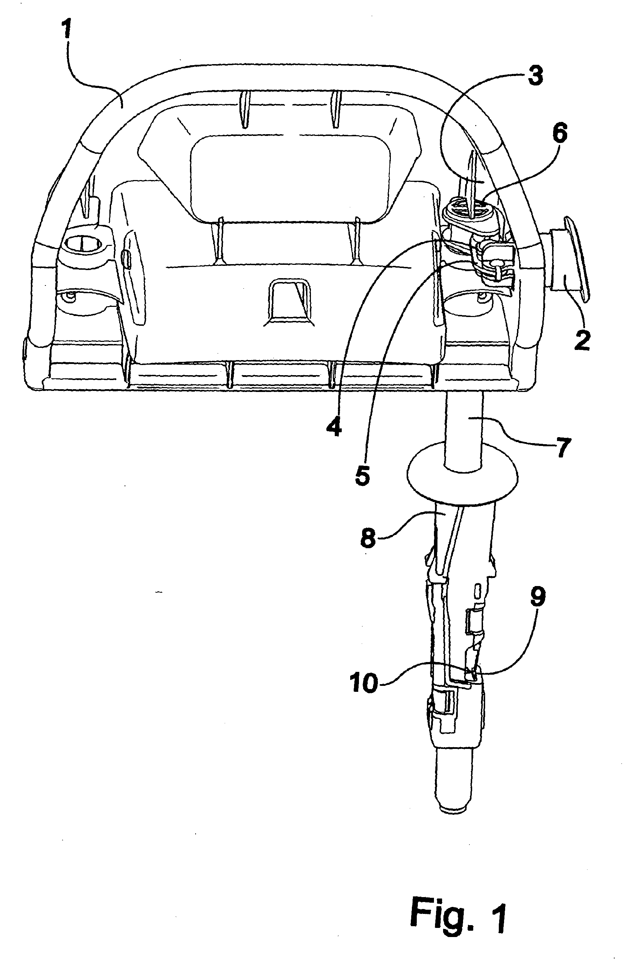

Fig. 1 zeigt in einer perspektivischen Ansicht ein Ausführungsbeispiel einer erfindungsgemäßen Betätigungsvorrichtung in einer Einbausituation in die Stützschale 1 einer Kopfstütze eines Kraftfahrzeugs. Die erfindungsgemäße Betätigungsvorrichtung verfügt über eine Lagerhülse 2, die an einer Seitenwand 3 der Stützschale 1 befestigt ist. In der Lagerhülse 2 ist in einer Betätigungsrichtung verschiebbar ein Anlenkschieber 4 gehalten, der mit einem Ende mit einem Mittenabschnitt eines Anlenkarmes 5 in Verbindung steht. Der Anlenkarm 5 wiederum steht mit einem Ende mit der Lagerhülse 2 und mit dem anderen Ende mit einem Anlenkkopf 6 in Verbindung, der wiederum auf ein Ende einer durch die Stützschale 1 durchgreifenden Fixierstange 7 aufgesteckt ist.

Die Fixierstange 7 steckt mit ihrem dem Anlenkkopf 6 abgewandten Endabschnitt in einer Stangenführungshülse 8, die wiederum in einem in Fig. 1 nicht dargestellten Sitz eines Kraftfahrzeugs fest verankert ist. An der Siangenführungshülse 8 ist eine Rastnase 9 ausgebildet, die in der Anordnung gemäß Fig. 1 in eine in der Fixierstange 7 eingebrachte Rastnut 10 eingreift, um eine Verschiebung der Fixierstange 7 in Bezug auf die Stangenführungshülse 8 in Längsrichtung zu blockieren. Um den Eingriff zwischen der Rastnase 9 und der Rastnut 10 zu lösen, um die Kopfstütze in ihrem Abstand von dem Sitz zu verändern, ist die Fixierstange 7 zu drehen.

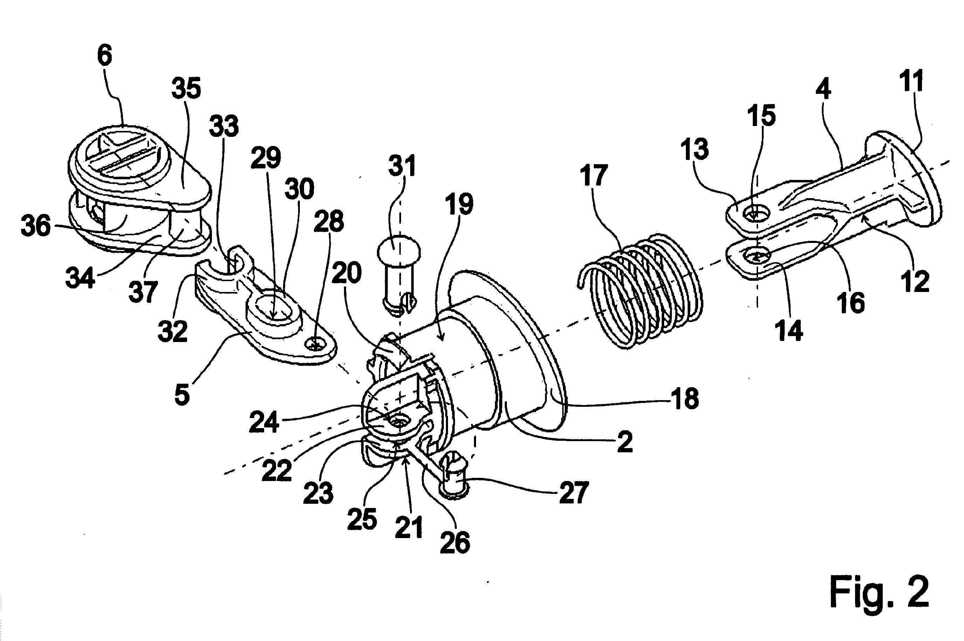

Fig. 2 zeigt in einer perspektivischen Explosionsansicht das Ausführungsbeispiel einer erfindungsgemäßen Betätigungsvorrichtung gemäß Fig. 1. Aus Fig. 2 ist ersichtlich, dass der Anlenkschieber 4 über eine endseitige, rundlich ausgebildete flache Druckplatte 11 verfügt, die an einen aus einer Anzahl von rechtwinklig zueinander ausgerichteten Längsrippen gebildeten Führungsabschnitt 12 angeformt ist. An dem der Druckplatte 11 abgewandten Ende des Führungsabschnittes 12 verfügt der Anlenkschieber 4 über flache, parallel zueinander ausgerichtete Schiebergabelarme 13, 14, in die jeweils zueinander fluchtende Schiebergabelarmausnehmungen 15, 16 eingebracht sind.

Weiterhin ist die erfindungsgemäß Betätigungsvorrichtung gemäß dem erläuterten Ausführungsbeispiel mit einer spiralförmig gewundenen Druckfeder 17 ausgestattet, deren Innendurchmesser so eingerichtet ist, dass der Anlenkschieber 4 mit seinem Führungsabschnitt 12 und den Schiebergabelarmen 13, 14 in den Innenraum der Druckfeder 17 einführbar ist, während die Druckplatte 11 an einem Ende der Druckfeder 17 anliegt. Der Außendurchmesser der Druckplatte 11 und der Druckfeder 17 sind im Wesentlichen gleich.

Die Lagerhülse 2 verfügt an einem Ende über einen Anlagering 18, der radial über einen Aufnahmeabschnitt 19 der Lagerhülse 2 übersteht und in der Einbausituation an der Außenseite einer Ummantelung der Stützschale 1 anliegt. Der Innendurchmesser des Aufnahmeabschnittes 19 der Lagerhülse 2 entspricht im Wesentlichen dem Außendurchmesser der Druckfeder 17 und der Druckplatte 11. An dem dem Anlagering 18 abgewandten Ende des Aufnahmeabschnittes 19 ist die Lagerhülse 2 mit federnden Schnappnasen 20, 21 ausgebildet, die in der Einbausituation gemäß Fig. 1 die Seitenwand 3 der Stützschale 1 hintergreifen und somit die Lagerhülse 2 mit der Stützschale 1 verbinden. Weiterhin ist die Lagerhülse 2 mit zwei einander gegenüberliegenden, parallel zueinander ausgerichteten Hülsengabelarmen 22, 23 ausgebildet, die an dem von dem Anlagering 18 abgewandten Ende des Aufnahmeabschnittes 19 angeformt sind. Jeder Hülsengabelarm 22, 23 ist mit einer Hülsengabelarmausnehmung 24, 25 ausgebildet, die fluchtend zueinander angeordnet sind. An einem Hülsengabelarm 22, 23 ist ein Anbindestreifen 26 angeformt, der einen gabelartigen, mit einem endseitigen Rastkragen ausgebildeten Anlenkarmlagerstift 27 mit der Lagerhülse 2 verbindet.

Der Anlenkarm 5 ist bei der beispielhaften Betätigungsvorrichtung als ein gerades Flachstück ausgebildet, bei dem an einem Ende eine Anlenkarmlagerausnehmung 28 mit einem Durchmesser eingebracht ist, der dem Durchmesser der Hülsengabelarmausnehmungen 24, 25 entspricht. Die Dicke des Anlenkarmes 5 im Bereich der Anlenkarmlagerausnehmung 28 und der Abstand der Hülsengabelarme 22, 23 sind so eingerichtet, dass das die Anlenkarmlagerausnehmung 28 aufweisende Ende des Anlenkarmes 5 zwischen die Hülsengabelarme 22, 23 einfügbar ist, so dass bei Durchstecken des Anlenkarmlagerstiftes 27 durch die Hülsengabelarmausnehmungen 24, 25 und die Anlenkarmlagerausnehmung 28 eine in Längsrichtung des Anlenkarmes 5 feste Anlenkarmgabelgelenkverbindung geschaffen ist.

Im Mittenbereich des Anlenkarmes 5 ist eine Anlenkarmbetätigungsausnehmung 29 vorhanden, die sich nach Art eines Langloches mit einem Längsabschnitt in Längsrichtung des Anlenkarmes 5 erstreckt, der länger als die Breite der Anlenkarmbetätigungsausnehmung 29 ist. Vorzugsweise ist, wie in Fig. 2 dargestellt, die Anlenkarmbetätigungsausnehmung 29 von einer beidseitig überstehenden Umrandung 30 umgeben, deren Dicke im Wesentlichen dem Abstand der Schiebergabelarme 13, 14 entspricht. Die Breite der Anlenkarmbetätigungsausnehmung 29 entspricht dem Durchmesser der Schiebergabelausnehmungen 15, 16, so dass bei Durchstecken eines Anlenkschieberlagerstiftes 31 durch die Schiebergabelarmausnehmungen 15, 16 und die Anlenkarmbetätigungsausnehmung 29 mit der somit ausgebildeten Anlenkschiebergabelgelenkverbindung der Anlenkschieberlagerstift 31 in Längsrichtung des Anlenkarmes 5 verschieblich ist.

An dem der Anlenkarmlagerausnehmung 28 gegenüberliegenden Ende weist der Anlenkarm 5 zwei einander gegenüberliegende Anlenkarmgabeln 32, 33 auf, die sich endseitig mit einem Schließabschnitt aufeinander zu erstrecken, wobei der Abstand zwischen den Schließabschnitten kleiner als der größte Abstand zwischen den Anlenkarmgabeln 32, 33 ist.

Aus der Darstellung gemäß Fig. 2 ist weiterhin ersichtlich, dass der Anlenkkopf 6 über zwei einander gegenüberliegende Anlenkkopfgabeln 34, 35, verfügt, die sich parallel zueinander radial von einem rundlichen Stangenaufnahmeabschnitt 36 weg erstrecken. Zwischen den von dem Stangenaufnahmeabschnitt 36 abgewandten Enden der Anlenkkopfgabeln 34, 35 erstreckt sich ein fest mit den Anlenkkopfgabeln 34, 35 verbundener Anlenkkopflagerstift 37, dessen Au-Bendurchmesser dem Innendurchmesser eines von den Anlenkarmgabeln 32, 33 umschlossenen Aufnahmeraumes entspricht. Somit umgreifen die Anlenkarmgabeln 32, 33 bei Einfügen des Anlenkkopflagerstiftes 37 in den Aufnahmeraum den Anlenkkopflagerstift 37 bis auf einen Freibereich und fixieren mit der dadurch ausgebildeten Anlenkkopfgabelgelenkverbindung den Anlenkkopf 6 schwenkbar an dem Anlenkarm 5.

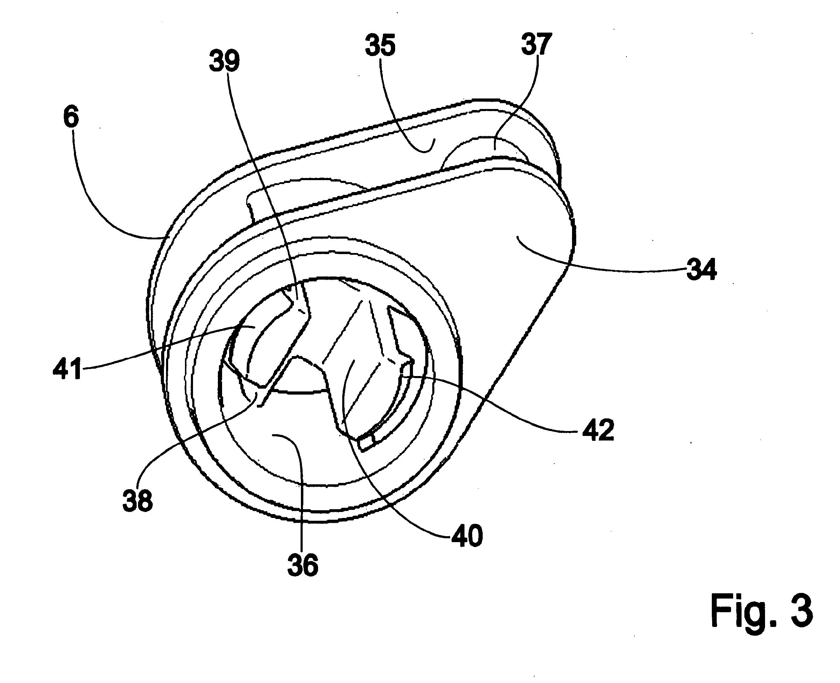

Fig. 3 zeigt in einer perspektivischen Ansicht den Anlenkkopf 6 gemäß dem erläuterten Ausführungsbeispiel mit Blick auf die Einführseite der in Fig. 3 nicht dargestellten Fixierstange 7. Aus Fig. 3 ist ersichtlich, dass der Stangenaufnahmeabschnitt 36 über einen Ausrichtsteg 38 verfügt, der sich in radialer Richtung von der Außenwand des Stangenaufnahmeabschnittes 36 bis in den Mittenbereich erstreckt. Beidseitig des Ausrichtsteges 38 verfügt der Anlenkkopf 6 über sich in Längsrichtung des Stangenaufnahmeabschnittes 36 erstreckende blattartige Eingriffsarme 39, 40, an deren Enden radial nach außen abstehende Verriegelungsnasen 41, 42 ausgebildet sind.

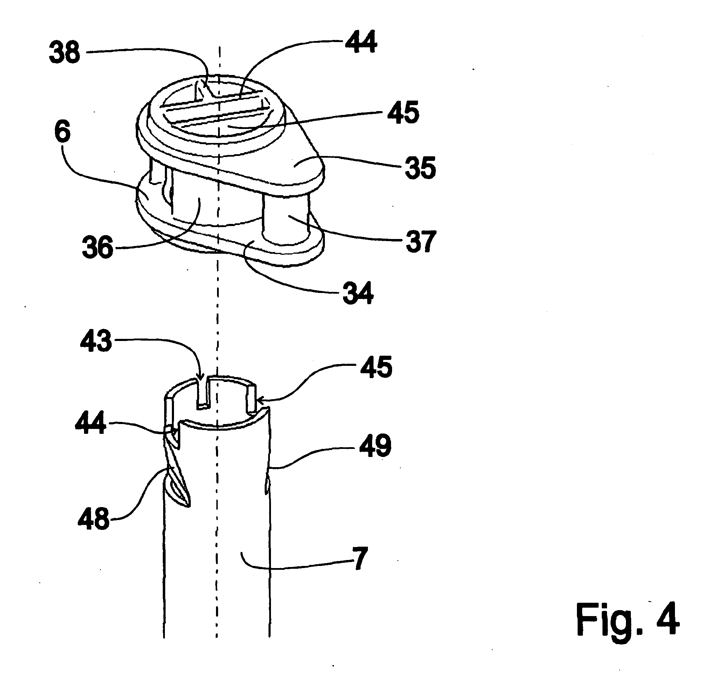

Fig. 4 zeigt in einer perspektivischen Ansicht den Anlenkkopf 6 gemäß dem Ausführungsbeispiel von Fig. 1 bis Fig. 3 und die Fixierstange 7 mit dem der Stangenführungshülse 8 abgewandten, in den Anlenkkopf 6 einzufügenden Ende. Fig. 4 ist zu entnehmen, dass das in den Anlenkkopf 6 einzufügende Ende der Fixierstange 7 zum einen über eine zur Aufnahme des Ausrichtsteges 38 eingerichtete Ausrichtnut 43 sowie über beidseitig der Ausrichtnut 43 angeordnete Eingriffsnuten 44, 45 zur Aufnahme von mit den Eingriffsarmen 39, 40 verbundenen Querstegen 46, 47. In Verlängerung der Querstege 46, 47 in Längsrichtung der Fixierstange 7 sind radial nach innen stehende Einprägungen 48, 49 ausgebildet, deren Erstreckung in Längsrichtung so eingerichtet ist, dass bei Auflage des Anlenkkopfes 6 an dem stirnseitigen Ende der Fixierstange 7 die Verriegelungsnasen 41, 42 die Einprägungen 48, 49 hintergreifen. Somit ist der Anlenkkopf 6 drehfest mit der Fixierstange 7 verbunden.

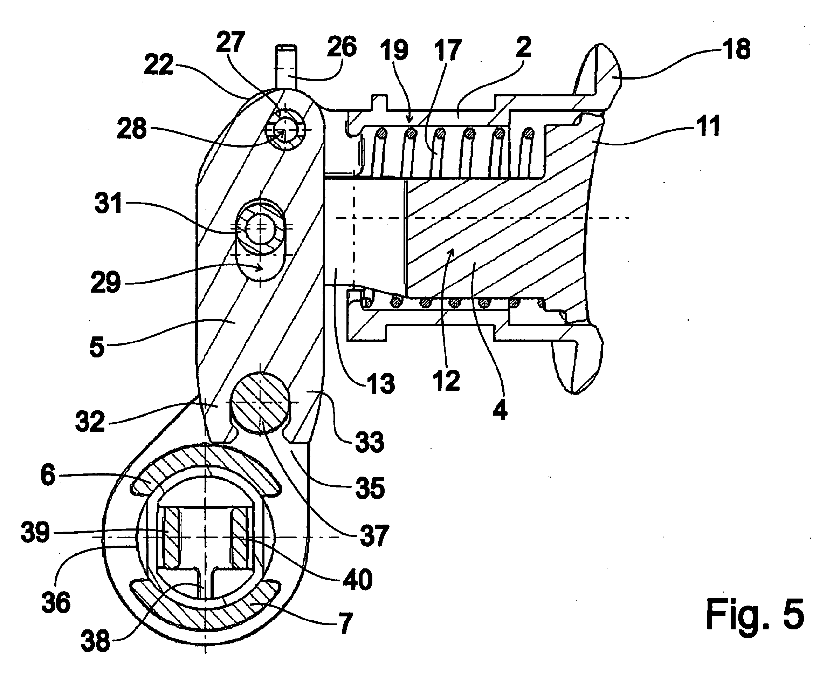

Fig. 5 zeigt im Schnitt das Ausführungsbeispiel gemäß Fig. 1 in einer ersten Schwenkstellung, in der die Druckfeder 17 den Anlenkschieber 4 in eine Stellung drückt, in der die Außenseite der Druckplatte 11 mit der Außenseite des Anlageringes 18 bündig und der Anlenkschieberlagerstift 31 an dem der Anlenkarmlagerausnehmung 28 benachbarten Ende der Anlenkarmbetätigungsausnehmung 29 angeordnet ist. In dieser Stellung des Anlenkarmes 5 befindet sich die Fixierstange 7 in der Ausrichtung gemäß Fig. 1, in der die an der Stangenführungshülse 8 ausgebildete Rastnase 9 mit einer in der Fixierstange 7 ausgebildeten Rastnut 10 in Eingriff ist und somit die Fixierstange gegenüber einer Verschiebung in ihrer Längsrichtung blockiert ist.

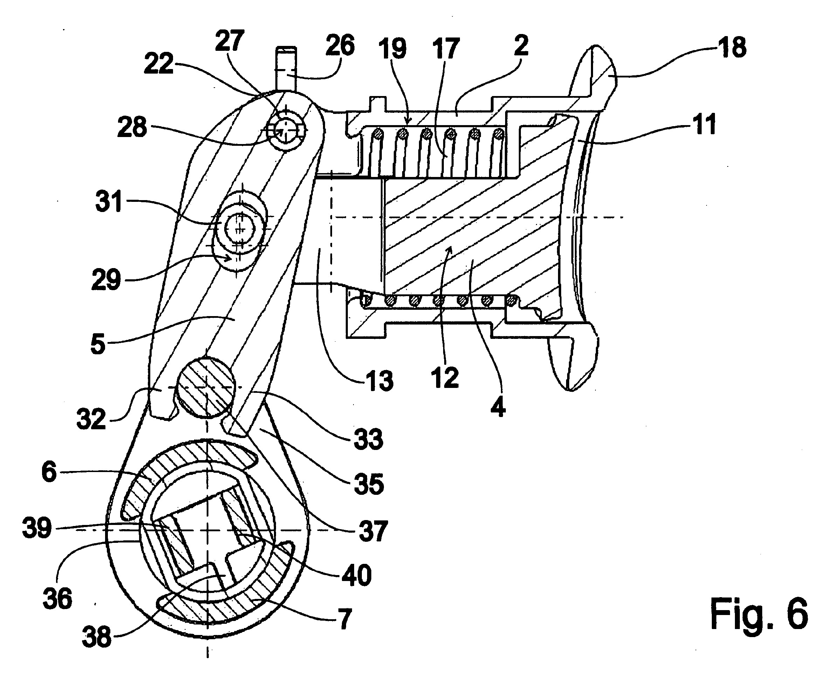

Fig. 6 zeigt im Schnitt das Ausführungsbeispiel gemäß Fig. 1 in einer zweiten Schwenkstellung, in der der Anlenkschieber 4 gegen den Druck der Druckfeder 17 durch Ausüben einer Druckkraft auf die Druckplatte 11 eingeschoben ist. In dieser zweiten, intermediären Schwenkstellung ist der Anlenkschieberlagerstift 31 in etwa in der Mitte der Anlenkarmbetätigungsausnehmung 29 angeordnet und der Anlenkkopf 6 zusammen mit der drehfest mit ihm in Verbindung stehenden Fixierstange 7 aus der ersten Schwenkstellung gemäß Fig. 5 gedreht. In der zweiten Schwenkstellung ist der Eingriff zwischen der Rastnase 9 und der Rastnut 10 teilweise gelöst, wobei durch Bewegen des Anlenkschiebers 4 bis zum Anschlug des Anlenkschieberlagerstiftes 31 an das den Anlenkarmgabeln 32, 33 zugewandte Ende der Anlenkarmbetätigungsausnehmung 29 der Eingriff zwischen der Rastnase 9 und der Rastnut 10 vollständig gelöst ist, so dass die Fixierstange 7 nunmehr in ihrer Längsrichtung verschiebbar ist.

Sobald auf die Druckplatte 11 keine Kraft mehr ausgeübt wird, drückt die Druckfeder 17 den Anlenkschieber 4 von dem Anlenkarm 5 weg, so dass sich die Fixierstange 7 wieder in die Ausrichtung in der ersten Schwenkstellung gemäß Fig. 5 bewegt und die Rastnase 9 wieder mit einer Rastnut 10 in Eingriff kommt, sobald eine entsprechende Relativpositionierung der Fixierstange 7 eingenommen worden ist.

## Patentansprüche

1. Betätigungsvorrichtung für eine in einer Längsrichtung zu verschiebende Fixierstange, insbesondere für eine Fixierstange (7) für eine Kopfstütze eines Kraftfahrzeugs, mit einer Lagerhülse (2), mit einem in der Lagerhülse (2) in einer Betätigungsrichtung verschiebbar gelagerten Anlenkschieber (4) und mit einem auf die Fixierstange (7) einwirkenden Mechanismus, der mit dem Anlenkschieber (4) zur Freigabe der Fixierstange (7) zum Verschieben derselben in Eingriff ist, **dadurch gekennzeichnet, dass** der Mechanismus einen an der Lagerhülse (2) schwenkbar angebrachten Anlenkarm (5) aufweist, der mit dem Anlenkschieber (4) über einen Winkelbereich schwenkbar ist, und über einen drehfest mit der Fixierstange (7) zu verbindenden Anlenkkopf (6) verfügt, der mit dem Anlenkarm (5) derart gekoppelt ist, dass die bei Betätigen des Anlenkschiebers ausgelöste Schwenkbewegung auf den Anlenkkopf (6) als Drehbewegung übertragen wird.

2. Betätigungsvorrichtung nach Anspruch 1, **dadurch gekennzeichnet, dass** eine Druckfeder (17) vorhanden ist, die sich zum einen an der Lagerhülse (2) und zum anderen an dem Anlenkschieber (4) abstützt.

3. Betätigungsvorrichtung nach Anspruch 1 oder Anspruch 2, **dadurch gekennzeichnet, dass** die Lagerhülse (2) und ein Ende des Anlenkarmes (5) über eine in Längsrichtung des Anlenkarmes (5) feste Anlenkarmgabelgelenkverbindung (22, 23, 28, 31) miteinander in Verbindung stehen.

4. Betätigungsvorrichtung nach Anspruch 3, **dadurch gekennzeichnet, dass** die Anlenkarmgabelgelenkverbindung zwischen der Lagerhülse (2) und dem Anlenkarm (5) einen lösbaren Anlenkarmlagerstift (27) aufweist, der durch an der Lagerhülse (2) ausgebildete Hülsengabelarme (22, 23) und eine in dem Anlenkarm (5) ausgebildete Anlenkarmlagerausnehmung (28) durchgreift.

5. Betätigungsvorrichtung nach einem der Ansprüche 1 bis 4, **dadurch gekennzeichnet, dass** der Anlenkschieber (4) und der Anlenkarm (5) über eine zwischen den Enden des Anlenkarmes (5) ausgebildete, in Längsrichtung des Anlenkarmes (5) verschiebliche Anlenkschiebergabelgelenkverbindung (13, 14, 29, 31) miteinander in Verbindung stehen.

6. Betätigungsvorrichtung nach Anspruch 5, **dadurch gekennzeichnet, dass** die Anlenkschiebergabelgelenkverbindung zwischen dem Anlenkschieber (4) und dem Anlenkarm (5) einen lösbaren Anlenkschieberlagerstift (31) aufweist, der durch an dem Anlenkschieber (4) ausgebildete Schiebergabelarme (13, 14) und eine im Mittenbereich des Anlenkarmes (5) ausgebildete, nach Art eines sich in Längsrichtung des Anlenkarmes (5) erstreckenden Langloches ausgebildete Anlenkarmbe-tätigungsausnehmung (29) erstreckt.

7. Betätigungsvorrichtung nach Anspruch 6, **dadurch gekennzeichnet, dass** beidseitig der Anlenkarmbetätigungsausnehmung (29) eine Umrandung (30) ausgebildet ist, deren Dicke dem Abstand der Schiebergabelarme (13, 14) entspricht.

8. Betätigungsvorrichtung nach einem der Ansprüche 1 bis 7, **dadurch gekennzeichnet, dass** der Anlenkarm (5) und der Anlenkkopf (6) über eine in Längsrichtung des Anlenkarmes (5) feste Anlenkkopfgabelgelenkverbindung (32, 33, 37) miteinander in Verbindung stehen.

9. Betätigungsvorrichtung nach Anspruch 8, **dadurch gekennzeichnet, dass** die Anlenkkopfgabelgelenkverbindung einen feststehenden Anlenkkopflagerstift (37) aufweist, der mit an dem Anlenkkopf (6) angeformten Anlenkkopfgabeln (34, 35) verbunden ist und von an dem Anlenkarm (5) ausgebildeten Anlenkarmgabeln (32, 33) bis auf einen Freibereich umschlossen ist.

## Claims

1. Actuating arrangement for a fixing rod intended for displacement in a longitudinal direction, and in particular for a fixing rod (7) for a head-rest in a motor vehicle, having a mounting sleeve (2), having a coupled slider (4) which is mounted in the mounting sleeve (2) to be displaceable in an actuating direction, and having a mechanism which acts on the fixing rod (7) and which is in engagement with the coupled slider (4) to release the fixing rod (7) to allow it to be displaced, **characterised in that** the mechanism has a coupling arm (5) which is pivotably mounted on the mounting sleeve (2) and which can be pivoted by the coupled slider (4) through an angular range, and has a coupled head (6) intended to be coupled to the fixing rod (7) to be solid in rotation therewith, which coupled head (6) is coupled to the coupling arm (5) in such a way that the pivoting movement which is initiated when the coupled slider is actuated is transmitted to the coupled head (6) as a rotary movement.

2. Actuating arrangement according to claim 1, **characterised in that** a compression spring (17) is present which is supported on the one hand on the mounting sleeve (2) and on the other hand on the coupled slider (4).

3. Actuating arrangement according to claim 1 or claim 2, **characterised in that** the mounting sleeve (2) and one end of the coupling arm (5) are connected together by a coupling-arm clevis connecting joint (22, 23, 28, 31) which is fixed in the longitudinal direction of the coupling arm (5).

4. Actuating arrangement according to claim 3, **characterised in that** the coupling-arm clevis connecting joint between the mounting sleeve (2) and the coupling arm (5) has a releasable coupling-arm mounting pin (27) which passes through arms (22, 23) of the clevis formed on the mounting sleeve (2) and through a coupling-arm mounting opening (28) which is formed in the coupling arm (5).

5. Actuating arrangement according to one of claims 1 to 4, **characterised in that** the coupled slider (4) and the coupling arm (5) are connected together by a coupled-slider clevis connecting joint (13, 14, 29, 31) which is formed between the ends of the coupling arm (5) and which is displaceable in the longitudinal direction of the coupling arm (5).

6. Actuating arrangement according to claim 5, **characterised in that** the coupled-slider clevis connecting joint between the coupled slider (4) and the coupling arm (5) has a releasable coupled-slider mounting pin (31) which extends through arms (13, 14) of the clevis formed on the coupled slider (4) and through a coupling-arm actuating opening (29) which is formed in the central area of the coupling arm (5) and which is formed to appear as a slotted hole extended in the longitudinal direction of the coupling arm (5).

7. Actuating arrangement according to claim 6, **characterised in that** a surround (30) whose thickness corresponds to the distance between the arms (13, 14) of the clevis is formed on both sides of the coupling-arm actuating opening (29).

8. Actuating arrangement according to one of claims 1 to 7, **characterised in that** the coupling arm (5) and the coupled head (6) are connected together by a coupled-head claw connecting joint (32, 33, 37) which is fixed in the longitudinal direction of the coupling arm (5).

9. Actuating arrangement according to claim 8, **characterised in that** the coupled-head claw connecting
joint has a fixed coupled-head mounting pin (37) which is connected to coupled-head lobes (34, 35) integrally formed on the coupled head (6) and which, except in a free area, is surrounded by the arms (32, 33) of the claw formed on the coupling arm (5).

## Revendications

1. Dispositif d'actionnement d'une barre d'immobilisation en position destinée à être déplacée dans le sens longitudinal, notamment pour une barre d'immobilisation en position (7) d'un appui-tête d'un véhicule automobile, comprenant une douille formant portée (2), comportant une coulisse de pivotement par effet d'articulation (4) disposée avec la possibilité de se déplacer dans une direction d'actionnement, et comportant un mécanisme agissant sur la barre d'immobilisation en position (7), qui se trouve en prise d'engagement avec la coulisse de pivotement par effet d'articulation (4) pour libérer la barre d'immobilisation en position (7) pour permettre à cette dernière d'être déplacée, **caractérisé en ce que** le mécanisme comporte un bras de pivotement articulé (5) disposé, avec la possibilité de pivoter, sur la douille formant portée (2), qui peut être basculé avec la coulisse de pivotement (4) par l'intermédiaire d'une portée angulaire et qui est muni d'une tête de pivotement articulée (6) destinée à être reliée, immobilisée en rotation, à la barre d'immobilisation en position (7), et qui est accouplée au bras de pivotement articulé (5) dans des conditions telles que le mouvement de basculement qui est déclenché sous l'effet de l'actionnement de la coulisse de pivotement par effet d'articulation est répercuté sur la tête de pivotement articulée (6) sous la forme d'un mouvement de rotation.

2. Dispositif d'actionnement selon la revendication 1, **caractérisé en ce qu'**il est prévu un ressort de compression (17), qui prend appui d'un côté sur la douille formant portée (2) et de l'autre sur la coulisse de pivotement (4).

3. Dispositif d'actionnement selon la revendication 1 ou la revendication 2, **caractérisé en ce que** la douille formant portée (2) et une extrémité du bras de pivotement articulé (5) sont en relation d'accouplement réciproque par
l'intermédiaire d'une liaison d'accouplement par chape à bras de pivotement articulé (22, 23, 28, 31).

4. Dispositif d'actionnement selon la revendication 3, **caractérisé en ce que** la liaison d'accouplement par chape à bras de pivotement articulé comprend, disposé entre la douille formant portée (2) et le bras de pivotement articulé (5), une goupille d'appui de bras de pivotement articulé amovible (27), qui vient s'engager en prise au travers de bras en forme de chape formant douille de portée (22, 23) et un évidement d'appui du bras de pivotement articulé (28) ménagé dans le bras de pivotement articulé (5).

5. Dispositif d'actionnement selon l'une des revendications 1 à 4, **caractérisé en ce que** la coulisse de pivotement (4) et le bras de pivotement articulé (5) sont en liaison d'accouplement réciproque par l'intermédiaire d'une liaison d'accouplement par chape à coulisse de pivotement (13, 14, 29, 31) disposée entre les extrémités du bras de pivotement articulé (5) et pouvant être déplacée dans le sens longitudinal du bras de pivotement articulé (5).

6. Dispositif d'actionnement selon la revendication 5, **caractérisé en ce que** la liaison d'accouplement par chape à coulisse de pivotement comporte, disposée entre la coulisse de pivotement (4) et le bras de pivotement articulé (5), une goupille d'appui de coulisse de pivotement (31), qui s'étend au travers des bras de pivotement de la coulisse (13, 14) dont est munie la coulisse de pivotement (4) et un évidement d'actionnement du bras de pivotement articulé (29) s'étendant, sous la forme d'un trou oblong s'étendant dans le sens longitudinal du bras de pivotement articulé (5), dans la portion centrale du bras de pivotement articulé (5).

7. Dispositif d'actionnement selon la revendication 6, **caractérisé en ce qu'**il est prévu, de part et d'autre de l'évidement d'actionnement du bras articulé (29) une bordure (30), dont l'épaisseur correspond à l'intervalle d'écartement des bras de pivotement de la coulisse (13, 14).

8. Dispositif d'actionnement selon l'une des revendications 1 à 7, **caractérisé en ce que** le bras de pivotement articulé (5) et la tête de pivotement articulée (6) sont en liaison de raccordement réciproque par l'intermédiaire d'une liaison par chape de tête de pivotement articulée (32, 33, 37).

9. Dispositif d'actionnement selon la revendication 8, **caractérisé en ce que** la liaison par chape de tête de pivotement articulée comporte une goupille d'appui de tête articulée (37) fixe, qui est raccordée à des chapes de tête articulée (34, 35) réalisées solidaires par formage de la tête de pivotement articulée (6) et qui est enserrée, à l'exception d'une portion libre, par des chapes de bras articulés (32, 33) que comporte le bras articulé (5).
